(19) Europäisches Patentamt
European Patent Office
Office européen des brevets

(11) **EP 2 573 515 B1**

(12) **FASCICULE DE BREVET EUROPEEN**

(45) Date de publication et mention
de la délivrance du brevet:
**06.11.2019 Bulletin 2019/45**

(51) Int Cl.:
***G01C 19/56*** *(2012.01)* ***G01C 25/00*** *(2006.01)*

(21) Numéro de dépôt: **12186191.8**

(22) Date de dépôt: **26.09.2012**

(54) **ÉTALONNAGE DE GYROSCOPE VIBRANT**

EICHUNG EINES SCHWINGUNGSKREISELS

VIBRATING GYROSCOPE CALIBRATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.09.2011 FR 1102909**

(43) Date de publication de la demande:
**27.03.2013 Bulletin 2013/13**

(73) Titulaire: **Safran Electronics & Defense
92100 Boulogne-Billancourt (FR)**

(72) Inventeurs:
• **Rosellini, Lionel
75015 PARIS (FR)**
• **Bresson, Mathieu
75015 PARIS (FR)**

(74) Mandataire: **Plasseraud IP
66, rue de la Chaussée d'Antin
75440 Paris Cedex 09 (FR)**

(56) Documents cités:
**US-A1- 2009 095 078 US-B1- 6 598 455**

• **SUNGSU PARK ET AL: "Adaptive Control for the Conventional Mode of Operation of MEMS Gyroscopes", JOURNAL OF MICROELECTROMECHANICAL SYSTEMS, IEEE SERVICE CENTER, US, vol. 12, no. 1, 1 février 2003 (2003-02-01), XP011064838, ISSN: 1057-7157**
• **R.P. LELAND: "Adaptive control of a MEMS gyroscope using Lyapunov methods", IEEE TRANSACTIONS ON CONTROL SYSTEMS TECHNOLOGY, vol. 14, no. 2, 1 mars 2006 (2006-03-01), pages 278-283, XP055030355, ISSN: 1063-6536, DOI: 10.1109/TCST.2005.860514**
• **SHKEL A M ET AL: "Dynamics and control of micromachined gyroscopes", AMERICAN CONTROL CONFERENCE, 1999. PROCEEDINGS OF THE 1999 SAN DIEGO, CA, USA 2-4 JUNE 1999, PISCATAWAY, NJ, USA,IEEE, US, vol. 3, 2 juin 1999 (1999-06-02), pages 2119-2124, XP010344594, DOI: 10.1109/ACC.1999.786303 ISBN: 978-0-7803-4990-2**

**Description**

La présente invention est relative aux gyroscopes vibrants dont le principe repose sur l'effet de Coriolis et elle est plus particulièrement relative au calibration de ce type de gyroscope.

Comme tout dispositif de mesure, il est requis de procéder à une étape de calibration sur un gyroscope vibrant, c'est-à-dire une étape au cours de laquelle on définit les corrections à apporter à la valeur de mesure brute de l'appareil de façon à améliorer sa précision en fonction de divers paramètres mesurés par ailleurs, tels que la température, de façon à ce que ce dispositif de mesure ait un fonctionnement correct.

Classiquement, un gyroscope vibrant est calibré avant d'être utilisé. Il peut ainsi être calibré en sortie d'usine, comme par exemple dans le document US2009/0095078 introduisant un signal de perturbation carré pour l'estimation du facteur d'échelle d'un gyroscope utilisé en mode gyromètre en boucle fermée.

Dans certains systèmes, il est prévu d'utiliser un gyroscope en compensant ses défauts de biais et son facteur d'échelle. Dans d'autres systèmes, il est en outre prévu d'appliquer une calibration interne du ou des gyroscopes utilisés. Une telle calibration interne consiste à déterminer des coefficients de correction au sein d'une boucle d'asservissement du gyroscope considéré. Une telle calibration interne est basée, pour les gyroscopes vibrants, sur une rotation de la position de vibration. Le mode d'utilisation en gyroscope permet de mesurer un angle de rotation absolu sur la base d'une mesure d'un angle représentant la position de vibration du gyroscope par rapport à des électrodes de mesure.

Toutefois, il n'est pas possible d'appliquer une telle correction à un gyroscope utilisé en mode gyromètre. En effet, dans ce dernier mode, la position de vibration du gyroscope vibrant est maintenue dans une position fixe, et la mesure est déduite à partir de la commande qu'il est nécessaire d'appliquer au gyroscope pour le maintenir dans cette position de vibration fixe. Les valeurs fournies par la mesure physique ne correspondent plus alors à un angle mais à une vitesse de rotation.

La présente invention vient améliorer la situation.

Un premier aspect de la présente invention propose un procédé de calibration d'un gyroscope vibrant ; ledit gyroscope vibrant fournissant des mesures et étant asservi en gyromètre dans une boucle d'asservissement ; ladite boucle d'asservissement comprenant au moins une commande courante d'un paramètre opérationnel ; ledit procédé de calibration comprenant les étapes suivantes dans la boucle d'asservissement :

/a/ obtenir une commande modifiée à appliquer au gyromètre pour ledit paramètre opérationnel en introduisant une perturbation sinusoïdale dans la commande courante ;
/b/ appliquer la commande modifiée au gyromètre en tant que commande courante ;
/c/ déterminer une valeur de mesure résultant de l'étape /b/ ;
/d/ identifier une valeur de correction du paramètre opérationnel sur la base d'une corrélation entre la valeur de mesure et la commande modifiée ;

ladite valeur de correction étant appliquée aux prochaines mesures fournies par le gyroscope.

On entend par les termes 'boucle d'asservissement', une boucle permettant d'asservir le gyroscope vibrant dans sa position de vibration. On entend par paramètre opérationnel tout paramètre caractéristique de la vibration, telle qu'une amplitude de vibration par exemple. Il est ici prévu d'appliquer au gyroscope vibrant au moins une commande d'un paramètre opérationnel dans cette boucle d'asservissement. On entend par les termes 'paramètre opérationnel', un paramètre relatif au fonctionnement du gyroscope dans le sens où une modification de ce paramètre induit un changement dans le résultat mesuré par le gyroscope vibrant. Un tel paramètre opérationnel peut notamment être relatif à la raideur de la vibration du gyroscope, ou encore à la position de vibration du gyroscope, ou à l'amplitude de vibration du gyroscope, ou encore par exemple à la quadrature de vibration du gyroscope.

En effet, on entend par le terme 'commande', un signal permettant de commander le gyroscope relativement à un paramètre opérationnel donné. Ainsi, à différents types de paramètre opérationnel correspondent respectivement différents types de commande.

Cette commande est astucieusement modifiée par injection d'une perturbation sinusoïdale de sorte à faire varier la mesure que le gyroscope fournit en sortie. On peut ainsi exciter différents défauts du système, sans toutefois faire tourner sa position angulaire. On entend par les termes 'perturbation sinusoïdale' l'ajout à la commande courante d'un signal sinus.

Aucune limitation n'est attachée à la définition d'une telle perturbation sinusoïdale.

On entend par les termes 'mesure', ou par la suite les termes 'signal de mesure', 'signal de sortie du gyroscope', 'détection', 'observation' et les termes similaires un signal fourni en sortie par le gyroscope.

Grâce à de telles caractéristiques, on est en mesure de calibrer un gyromètre vibrant, c'est-à-dire un gyroscope vibrant asservi en mode gyromètre, au sein même de sa boucle d'asservissement, tout en respectant la contrainte opérationnelle d'un gyromètre : ne pas faire tourner sa position de vibration. En effet, astucieusement ici, il est prévu de modifier une commande dans la boucle d'asservissement de sorte à perturber légèrement la boucle d'asservissement sans toutefois faire tourner la position de vibration du gyroscope vibrant. Ainsi, en introduisant une perturbation sinusoïdale dans une commande de la boucle d'asservissement, on est en mesure de détecter la réaction du gyroscope vibrant à certaines modifications astucieusement choisies. Cette réaction est lisible sur le signal sortant du gyroscope, c'est-à-dire sur les mesures fournies par le gyroscope. Puis, sur la base de ces réactions, il est alors possible de corriger certains défauts du gyroscope vibrant considéré.

Ainsi, en corrélant la valeur de mesure résultant de l'étape /c/ avec la commande modifiée appliquée en amont à l'étape /b/, il est possible d'établir une relation entre ces perturbations sinusoïdales de commande et les observations faites qui en découlent pour en déduire une correction des erreurs liées à ce gyroscope vibrant fonctionnant en mode gyromètre.

Ce procédé de calibration permet de limiter l'effet du vieillissement. Il permet de mettre à jour les corrections appliquées en fonction des conditions extérieures de fonctionnement qui évoluent, telles que la température ou l'humidité, par exemple.

Dans un mode de réalisation de la présente invention, une équation associée à la boucle d'asservissement relie une commande appliquée au gyroscope et une valeur de mesure en résultant ; et l'étape /d/ repose alors sur cette équation.

On peut ainsi considérer que l'équation suivante est vérifiée :

$$EU = f(X)$$

f étant une fonction prenant en paramètre d'entrée le signal de mesure ou encore 'détection ;
U étant la commande appliquée ; et
E étant une erreur à corriger.

Dans ces conditions, il reste ici à déterminer E afin de pouvoir identifier une valeur de correction à appliquer aux mesures fournies par le gyroscope.

Avantageusement, ce procédé de calibration peut être un procédé itératif. Les étapes consistant à perturber la ou les commandes appliquées au gyroscope vibrant, afin d'en déduire des corrections de mesure, peuvent être répétées tant qu'un critère de convergence n'est pas vérifié.

Ce procédé de calibration d'un gyroscope vibrant peut comprendre alors en outre l'étape suivante :
/e/ décider, sur la base de l'étape /d/, de répéter les étapes /a/ à /d/ tant qu'un critère de convergence n'est pas vérifié.

Il est ici décidé de répéter ces étapes en fonction de la corrélation faite entre la commande modifiée et la valeur de mesure obtenue en conséquence.

Il est possible de mettre en œuvre un tel procédé relativement à un ou plusieurs paramètres opérationnels, c'est-à-dire par application d'une ou plusieurs commandes correspondantes à ces paramètres opérationnels respectifs.

Afin de corriger des erreurs liées à un gyromètre vibrant axisymétrique, c'est-à-dire à un gyroscope vibrant à une position de vibration fixe, selon un mode de réalisation, il est prévu d'appliquer des modulations sur la commande considérée pour un paramètre opérationnel, ou encore sur les différentes commandes, autour d'une position d'asservissement. Ces modulations permettent d'introduire des perturbations sinusoïdales de manière contrôlée. Puis, sur la base de ces modulations, on peut faire un lien entre les commandes et les résultats détectés en sortie, c'est-à-dire les mesures fournies en sortie par le gyroscope.

Ce procédé de calibration itératif permet de limiter l'effet du vieillissement. Il permet de mettre à jour les corrections appliquées en fonction des conditions extérieures de fonctionnement qui évoluent, telles que la température ou l'humidité, par exemple.

Ce procédé peut être itéré le long d'un cycle thermique et il peut ainsi permettre une modélisation de différents défauts en fonction de la température.

Dans un mode de réalisation de la présente invention, le critère de convergence est vérifié si la valeur de correction du paramètre opérationnel est inférieure à une valeur seuil.

Dans un mode de réalisation de la présente invention, la perturbation sinusoïdale S appliquée sur les commandes vérifie l'équation suivante :

$$S = k.\sin(2.\pi.f_{mod})$$

où k est une valeur d'amplitude de la perturbation appliquée ; et
où $f_{mod}$ est une valeur de la fréquence de la perturbation appliquée.

En perturbant une commande appliquée au gyroscope vibrant par une telle perturbation sinusoïdale, on est en mesure de déterminer une réaction du gyroscope à cette perturbation qui permet de calibrer ce dernier de manière pertinente. Une telle perturbation sinusoïdale est particulièrement adaptée à la calibration par boucle d'asservissement d'un gyroscope vibrant en mode gyromètre selon un mode de réalisation de la présente invention.

Dans un mode de réalisation de la présente invention, les mesures du gyroscope sont relatives à une estimée de l'amplitude, à une estimée de l'erreur de phase, à une estimée de l'erreur de position ou à une estimée de la quadrature.

L'application de la présente invention à au moins un de ces paramètres opérationnels permet une calibration pertinente du gyroscope vibrant. Il est bien entendu possible d'appliquer séquentiellement la présente invention à tous les paramètres opérationnels énoncés ci-dessus afin d'obtenir une calibration plus fine du gyroscope vibrant.

Dans un mode de réalisation de la présente invention, les mesures du gyroscope sont fournies sous forme vectorielle et corrigées à l'aide d'une matrice de détection (A).

Dans un mode de réalisation de la présente invention, la commande courante est relative à un paramètre opérationnel parmi un paramètre relatif à une amplitude, un paramètre relatif à une raideur, un paramètre relatif à une précession et un paramètre relatif à une quadrature.

L'application de la présente invention à au moins un de ces paramètres opérationnels permet une calibration pertinente du gyroscope vibrant. Il est bien entendu possible d'appliquer séquentiellement la présente invention à tous les paramètres opérationnels énoncés ci-dessus afin d'obtenir une calibration plus fine du gyroscope vibrant.

Dans un mode de réalisation de la présente invention, les commandes modifiées à appliquer sont déterminées en parallèle sous forme matricielle, à l'aide d'une matrice de commande.

Dans un mode de réalisation de la présente invention, la commande peut être à une fréquence sensiblement égale à la fréquence propre du gyroscope vibrant ou à une fréquence sensiblement deux fois supérieure à la fréquence propre du gyroscope vibrant. Le mode de commande à la fréquence propre du gyroscope est appelée mode de commande conventionnelle et le mode de commande à une fréquence sensiblement deux fois supérieures à la fréquence propre du gyroscope est appelée mode de commande paramétrique.

Un deuxième aspect de la présente invention propose un système gyroscopique adapté pour la mise en œuvre d'un procédé de calibration selon le premier aspect de la présente invention.

D'autres caractéristiques et avantages de l'invention apparaîtront encore à la lecture de la description qui va suivre. Celle-ci est purement illustrative et doit être lue en regard des dessins annexés sur lesquels :

- la figure 1 illustre les principales étapes d'un procédé de calibration dans un système gyroscopique selon un mode de réalisation de la présente invention ;
- la figure 2 illustre une mise en œuvre du procédé de calibration dans un système gyroscopique selon un mode de réalisation de la présente invention ;
- la figure 3 illustre en détail un mode de réalisation de la présente invention appliqué à une pluralité de paramètres opérationnels ; et
- la figure 4 illustre un système gyroscopique selon un mode de réalisation de la présente invention.

Par la suite, la présente invention est décrite dans son application aux gyroscopes de type I. Ces gyroscopes de type I correspondent aux gyroscopes de type Coriolis Vibratory Gyroscopes (CVG) axisymétriques, comme par exemple de type Hemispherical Resonance Gyroscopes (HRG ou GRH), tels que décrits dans le document 'Type I and Type II micromachined vibratory gyroscopes' de Andrei M. Shkel, pages 586-593, IEEE/ION (pour 'Institute of Electrical and Electronics Engineer/ Institute Of Navigation' PLANS 2006, San Diego, CA, USA).

Par la suite également, les termes 'mesure', signal de mesure', signal de sortie du gyroscope', 'détection' et les termes similaires sont utilisés de manière équivalente.

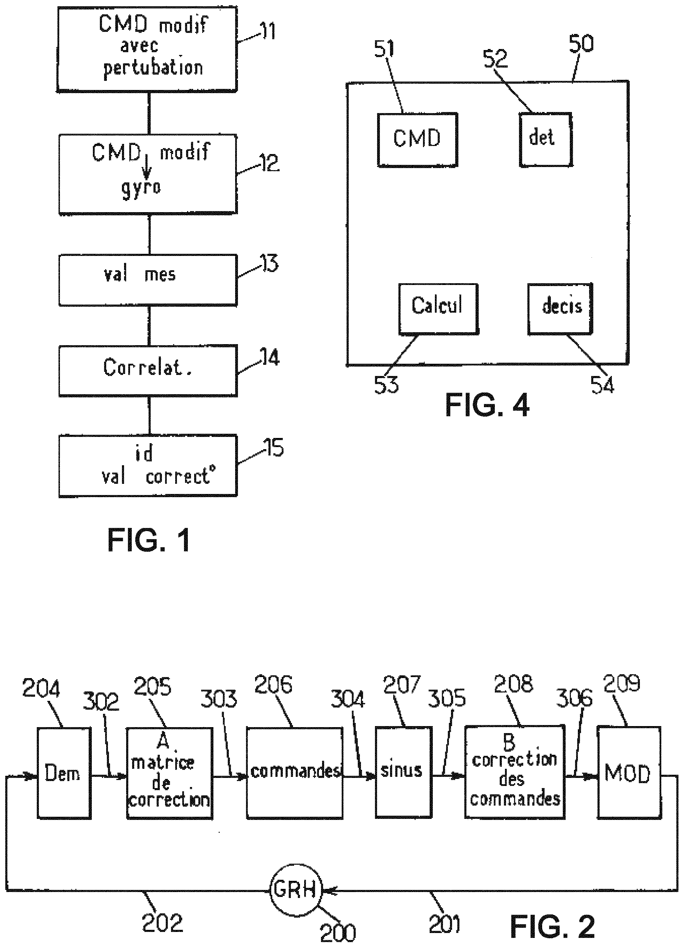

La figure 1 illustre les principales étapes d'un procédé de calibration dans un système gyroscopique selon un mode de réalisation de la présente invention.

Le gyroscope vibrant est asservi en gyromètre dans une boucle d'asservissement. La boucle d'asservissement correspond à au moins une commande courante d'un paramètre opérationnel.

A une étape 11, on obtient une commande modifiée à appliquer au gyromètre pour le paramètre opérationnel en introduisant une perturbation sinusoïdale dans la commande courante. Puis, à une étape 12, on applique la commande modifiée au gyromètre en tant que commande courante.

Ensuite, à une étape 13, on détermine une valeur de mesure résultant de l'étape 12. On corrèle, à une étape 14, la valeur de mesure obtenue à l'étape 13 avec la commande modifiée appliquée à l'étape 12.

Dans un mode de réalisation, cette étape de corrélation 14 repose sur une équation qui met en correspondance, d'un côté, la commande appliquée au gyroscope considéré et, d'un autre côté, la valeur de mesure fournie par le gyroscope résultante de l'application de ladite commande. En d'autres termes, une telle équation représente une réaction du gyroscope vibrant à une commande qui lui est appliquée.

Grâce à une telle équation de la réaction du gyroscope, on peut alors obtenir un jeu d'équations dans lequel l'inconnue ou les inconnues sont relatives à une erreur du gyroscope au regard d'un paramètre opérationnel ou de plusieurs paramètres opérationnels.

Afin d'obtenir un tel jeu d'équations, on peut modéliser la commande appliquée au gyroscope et lui adjoindre une composante d'erreur en tant qu'inconnue à identifier selon un mode de réalisation. Puis, on en déduit une modélisation du signal de mesure en sortie du gyroscope. Ensuite, le jeu d'équations est alors obtenu par application de l'équation de la réaction du gyroscope, qui relie la commande appliquée au signal de mesure du gyroscope.

Puis, à l'étape 15, il est prévu d'identifier, sur la base de la corrélation de l'étape 14, une valeur de correction à appliquer au gyroscope.

Un tel procédé peut être mis en œuvre de manière itérative jusqu'à ce qu'un critère de convergence soit rempli, relativement à la valeur de correction identifiée à l'étape 15. Dans ce cas, le procédé comprend en outre une étape 16 (non représentée sur la figure 1) de prise de décision de répéter les étapes 11 à 15, en fonction du résultat de l'étape 15 d'identification de la valeur de correction.

Dans un mode de réalisation de la présente invention, la corrélation qui est effectuée à l'étape 14 entre la commande modifiée et la valeur de mesure obtenue en conséquence permet d'identifier une valeur de correction à appliquer au paramètre opérationnel correspondant à cette commande modifiée. Puis, à l'étape 16, on peut décider de répéter ou non les étapes 11 à 15 en fonction d'un critère de convergence du procédé qui peut par exemple être atteint lorsque la correction à apporter au paramètre opérationnel considéré est inférieure à une valeur seuil.

Ainsi, dans le cas où le critère de convergence est atteint, le procédé de calibration est stoppé.

Aucune limitation n'est attachée au type de critère de convergence utilisé à l'étape 16. Ce critère de convergence peut reposer sur la définition d'une valeur seuil de correction en deçà de laquelle il est possible de stopper le procédé. En définissant ainsi une valeur seuil, on est en mesure de définir un compromis entre la rapidité de convergence du procédé d'un côté et un niveau de qualité de la correction des mesures du gyroscope de l'autre côté. En effet, plus la valeur seuil est élevée, plus rapidement le procédé converge, mais la correction appliquée alors au gyroscope est moins précise. D'un autre côté, plus la valeur seuil est faible, plus la correction appliquée au gyroscope est fine, mais moins vite le procédé converge.

La figure 2 illustre un schéma de principe de l'implémentation des corrections identifiées par la calibration au sein du bouclage gyroscopique selon un mode de réalisation de l'invention.

A titre illustratif uniquement, un procédé de calibration selon la présente invention est décrit dans son application à une pluralité de paramètres opérationnels et donc à une pluralité de commandes à appliquer au gyroscope. Ainsi, il est prévu de gérer la mise en œuvre de ce procédé de manière matricielle par la suite. Bien entendu, il est aisé d'en déduire un mode de réalisation appliqué à un seul paramètre opérationnel, qui ne nécessite pas une mise en œuvre matricielle.

Dans un mode de réalisation de la présente invention, le système gyroscopique comprend un gyroscope en mode gyromètre vibrant axisymétrique au sein d'une boucle d'asservissement. Un tel gyroscope est référencé ci-après 'gyromètre' 200.

Le gyromètre 200 est adapté pour être commandé en entrée par une ou plusieurs commandes selon des signaux analogiques 201, et pour fournir en sortie 202 des mesures selon un signal analogique répondant aux commandes reçues en entrée. La réaction du gyroscope peut être modélisée selon une fonction de transfert H. Au premier ordre, on peut considérer qu'un gyromètre vibrant opère comme un intégrateur entre le signal des commandes en entrée et le signal fourni en sortie.

Le signal analogique 202 en sortie du gyromètre 200 est converti en signal numérique par un convertisseur CAN ('convertisseur analogique numérique'), non illustré. Puis, le signal numérique obtenu en sortie du CAN est démodulé par un démodulateur 204. On obtient alors en sortie du démodulateur une estimée 302 du signal de mesure fourni par le gyroscope pour au moins une valeur du signal de mesure parmi les valeurs suivantes : une valeur d'amplitude, une valeur de phase, une valeur d'angle et une valeur de quadrature en sortie du CAN.

Ensuite, il est prévu de corriger cette estimée du signal de mesure démodulé en prenant en compte des valeurs de correction, obtenues selon un mode de réalisation, qui permettent de compenser des erreurs notamment introduites par les éléments électroniques de détection des mesures du gyroscope vibrant. A cet effet, une unité de correction de mesure 205 est adaptée pour appliquer ces valeurs de correction à l'estimée du signal démodulé, selon un mode de réalisation.

On peut noter que lors de la première itération de la calibration, les valeurs de correction sont initialisées à une valeur choisie. Dans un exemple de réalisation, les corrections peuvent être initialisées à zéro.

Cette unité de correction de mesure 205 est plus précisément ici adaptée pour appliquer la ou les valeurs de correction au signal de mesure, relativement à chaque paramètre opérationnel considéré.

L'unité de correction 205 est en charge d'une telle identification de valeur de correction pour un ou plusieurs types de paramètre opérationnel qui sont gérés dans un mode de réalisation. Lorsque plusieurs paramètres opérationnels sont calibrés selon un mode de réalisation, il est prévu que l'unité de correction de mesure gère notamment les valeurs de correction sous forme matricielle afin de les appliquer sous forme matricielle au signal de mesure estimé. On obtient ainsi en sortie de l'unité de correction de mesure 205 un signal de mesure 303 corrigé selon un mode de réalisation.

Cette unité de correction de mesure 205 est adaptée pour corriger différentes erreurs induites par le système, notamment par l'électronique du système et par les défauts du gyroscope considéré.

Puis, le signal de sortie du gyroscope ainsi corrigé est ensuite intégré par une unité d'intégration PI (pour 'Proportional Integral') au niveau d'une unité de commande 206 pour élaborer des commandes, ou encore un signal de commande 304, à partir du signal reçu en entrée.

Au niveau d'une unité de perturbation 207, il est prévu de modifier le signal de commande 304 entrant, par introduction d'une perturbation sinusoïdale selon un mode de réalisation de la présente invention, en vue d'obtenir un signal perturbé 305.

Puis, au niveau d'une unité de correction des commandes 208, on détermine des estimées de commande 306 à partir du signal perturbé 305 reçu.

Ces estimées de commande 306 sont ensuite modulées par une unité de modulation 209. Puis, le signal de commande modifiée obtenu en sortie de l'unité de modulation 209 est ensuite converti en signal analogique par un convertisseur numérique-analogique CNA (non illustré) pour être fourni en entrée du GRH 200.

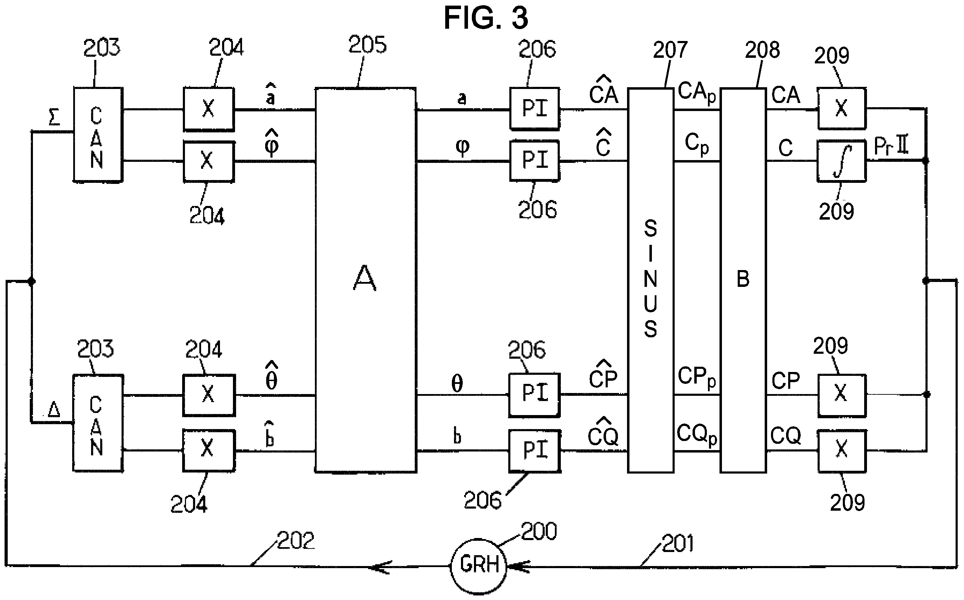

La figure 3 illustre en détail un mode de réalisation de la présente invention appliqué à une pluralité de paramètres opérationnels. Il est prévu ici de gérer de manière parallèle l'introduction de perturbations sinusoïdales selon un mode de réalisation de la présente invention pour une pluralité de commandes ou de mesures de paramètres opérationnels. Ainsi, les commandes à appliquer dans le cas illustré ainsi que les mesures du gyroscope sont relatives à au moins un paramètre opérationnel parmi les paramètres opérationnels suivants :

- amplitude de la vibration ;
- phase de la vibration ;
- position de la vibration (encore référencé 'angle de la vibration');
- quadrature.

Comme décrit en référence à la figure 2, le signal analogique en sortie du gyroscope est converti en signal numérique par des convertisseurs 203. Le signal 202 en sortie du GRH 200 est séparé en quatre signaux correspondant respectivement aux quatre paramètres opérationnels. Il convient de noter que deux voies distinctes sont ici prévues : une première voie $\Sigma$ et une seconde voie $\Delta$.

En sortie du convertisseur situé sur la voie $\Sigma$ sont fournis d'une part un signal modulé d'amplitude et d'autre part un signal modulé de phase. En sortie du convertisseur situé sur la voie $\Delta$ sont fournis, d'une part, un signal modulé d'angle et, d'autre part, un signal modulé de quadrature.

Ces quatre signaux 302 sont démodulés par démodulation 204 pour obtenir une estimée d'un signal d'amplitude $\hat{a}$, une estimée d'un signal de phase $\hat{\phi}$, une estimée d'un signal d'angle (ou position de vibration) $\hat{\theta}$ et une estimée d'un signal de quadrature $\hat{b}$.

Puis, on corrige ces quatre signaux au niveau de l'unité de correction 205 comme décrit ci-avant. Cette unité de correction applique ici les valeurs de correction respectives sous la forme d'une matrice A.

En sortie de cette matrice, on obtient donc les valeurs d'amplitude, de phase, d'angle et de quadrature qui sont corrigées, respectivement, a, $\varphi$, $\theta$ et b. Puis, chacun de ces signaux corrigés par la matrice de correction de mesure A est ensuite intégré en parallèle par des unités d'intégration 206, PI. On obtient alors des commandes relatives aux paramètres opérationnels correspondant $\hat{CA}$ (commande relative au paramètre d'amplitude), $\hat{C}$ (commande relative au paramètre de phase), $\hat{CP}$ (commande de précession relative au paramètre de position de vibration), $\hat{CQ}$ (commande relative au paramètre de quadrature), sous la forme d'estimées de commandes respectives.

Ensuite, ces commandes sont alors modifiées de sorte à obtenir des commandes modifiées à appliquer au gyroscope vibrant selon un mode de réalisation de la présente invention, par introduction d'une perturbation sinusoïdale.

Cette modification des commandes à appliquer au gyroscope 200 est effectuée notamment par le biais de l'unité de perturbation 207. L'unité de perturbation fournit des signaux CAp, Cp, CPp et CQp perturbés afin d'être corrigés, à l'aide d'une matrice B de commande au niveau de l'unité de correction de commandes 208. En sortie de cette matrice B, on récupère astucieusement les estimées de commandes modifiées CA, C, CP et CQ de paramètres opérationnels à appliquer au gyroscope vibrant considéré ici.

Ces estimées de commandes CA, C, CP et CQ sont ensuite modulées par une unité de modulation 209. Puis, le signal de commande modifiée obtenu en sortie de l'unité de modulation 209 est ensuite converti en signal analogique par un convertisseur numérique-analogique CNA (non illustré) pour être fourni en entrée du GRH 200.

L'application de la présente invention à au moins une de ces commandes permet une calibration du gyroscope vibrant.

Il est possible de mettre aisément en œuvre une calibration selon un mode de réalisation de la présente invention, dans un mode conventionnel ou encore dans un mode paramétrique.

On entend par mode conventionnel, le fait que la fréquence du signal de commande appliqué au gyroscope vibrant est la même que la fréquence propre du gyroscope vibrant lui-même.

On entend par mode paramétrique, le fait que la fréquence du signal de commande appliqué au gyroscope vibrant est le double de la fréquence propre du gyroscope vibrant lui-même.

Les sections suivantes décrivent en détail des mises en équations d'un mode de réalisation de la présente invention en mode conventionnel dans le cas général et dans un cas appliqué à un exemple particulier. Aucune limitation n'est attachée à ces mises en équations et elles sont ci-dessous détaillées à titre d'exemple.

Selon un mode de réalisation général de la présente invention, le signal de commande C appliqué au gyroscope vibrant et la valeur de mesure D en résultant dans le signal de sortie du gyroscope sont liés dans un mode conventionnel selon une équation du type :

$$f(A,B)\ddot{D} + g(A,B)\dot{D} + h(A,B)D = C \qquad (C1)$$

où f, g et h sont fonction des matrices A et B du système gyroscopique considéré, la matrice A étant la matrice de correction de détection électronique et la matrice B étant la matrice de commande.

Selon un mode de réalisation de la présente invention, il prévu d'injecter une perturbation sinusoïdale de pulsation notée $\omega$ dans une commande courante de sorte à obtenir une commande modifiée au niveau de la matrice de commande. En négligeant les harmoniques d'ordre 2, on obtient un jeu d'équations comme suit :

$$\begin{cases} C = C_0 + C_c \cos \omega t + C_s \sin \omega t \\ D = D_0 + D_c \cos \omega t + D_s \sin \omega t \end{cases}$$

où C est une commande courante correspondant au signal entrant 201 et D est le signal en résultant en sortie 202 ;
où $C_0$, $C_c$, $C_s$ et $D_0$, $D_c$, $D_s$ sont des constantes ; et
où $\omega$ est la pulsation du gyroscope vibrant.

On prévoit dans un mode de réalisation d'appliquer alternativement, sur chacune des commandes d'une pluralité de commandes, une perturbation sinusoïdale. Ainsi, on peut écrire, pour une commande d'indice i parmi une pluralité de n commandes (donc pour i compris entre 0 et n-1) :

$$\begin{cases} C = C_{0i} + C_{ci} \cos \omega t + C_{si} \sin \omega t \\ D = D_{0i} + D_{ci} \cos \omega t + D_{si} \sin \omega t \end{cases}$$

où $C_{0i}$, $C_{ci}$, $C_{si}$ et $D_{0i}$, $D_{ci}$, $D_{si}$ sont des constantes ; et

En dérivant successivement le signal D, on peut écrire ce qui suit :

$$\begin{cases} D = D_{0i} + D_{ci} \cos \omega t + D_{si} \sin \omega t \\ \dot{D} = -\omega D_{ci} \sin \omega t + \omega D_{si} \cos \omega t \\ \ddot{D} = -\omega^2 D_{ci} \cos \omega t - \omega^2 D_{si} \sin \omega t \end{cases}$$

Puis, on peut alors réécrire l'équation (C1) comme suit :

$$-f(A,B)\omega^2 D_{ci} \cos \omega t - f(A,B)\omega^2 D_{si} \sin \omega t$$
$$-g(A,B)\omega D_{ci} \sin \omega t + g(A,B)\omega D_{si} \cos \omega t$$
$$+h(A,B)D_{0i} + h(A,B)D_{ci} \cos \omega t + h(A,B)D_{si} \sin \omega t = C_{0i} + C_{ci} \cos \omega t + C_{si} \sin \omega t$$

Ensuite, par décomposition harmonique, on peut obtenir le jeu d'équations suivant :

$$\begin{cases} h(A,B)D_{0i} = C_{0i} \\ -f(A,B)\omega^2 D_{ci} + g(A,B)\omega D_{si} + h(A,B)D_{ci} = C_{ci} \\ -f(A,B)\omega^2 D_{si} - g(A,B)\omega D_{ci} + h(A,B)D_{si} = C_{si} \end{cases}$$

La résolution de ce dernier jeu d'équations peut se ramener à la résolution d'un système linéaire. Par application d'une méthode des moindres carrés sur les n relations obtenues avec les n commandes prises en considération, on peut alors identifier les matrices A et B selon un mode de réalisation de la présente invention.

Dans un deuxième mode de réalisation, appliqué à un exemple, un GRH peut être modélisé en tant que système à double oscillateur selon un mode x et un mode y.

Une équation mécanique relativement à ce gyroscope peut être la suivante :

$$\ddot{\eta}_1 + \omega_0^2 \eta_1 = F_1$$

$$\ddot{\eta}_2 + \omega_0^2 \eta_2 = F_2$$

Ce système d'équations peut être écrit sous la forme vectorielle suivante :

$$\ddot{\eta} + \omega_0^2 \eta = F$$

$$\eta = \begin{bmatrix} \eta_1 \\ \eta_2 \end{bmatrix} \; ;$$

où $\eta$ est la position de la vibration avec

où $\omega_0$ est la pulsation de la vibration (supposée ici identique sur les deux modes x et y du gyroscope considéré) ;
où F est la force appliquée sur chacun des modes x et y,

$$F = \begin{bmatrix} F_1 \\ F_2 \end{bmatrix},$$

avec           cette force étant pilotée par la commande appliquée au gyroscope.

On suppose que le signal de mesure, ou bien la mesure, notée X, c'est-à-dire l'observation de la vibration du gyroscope, est effectuée sans erreur. On a donc :

$$\eta = X$$

On suppose un défaut au niveau de l'injection de la commande, ou des commandes, sur le système. On a l'équation suivante :

$$F = EU$$

où E est une matrice de défaut ou encore matrice d'erreur que l'on cherche à déterminer pour corriger les erreurs du système et de ce fait calibrer le gyroscope.

L'équation du système s'écrit alors comme suit :

$$\ddot{X} + \omega_0^2 X = EU$$

Dans un mode de réalisation de la présente invention, on injecte une perturbation sinusoïdale sur chaque commande $U_i$, i compris entre 1 et n, n étant le nombre de commandes géré dans ce mode de réalisation, chacune correspondant à un paramètre opérationnel.

Dans un tel contexte, l'équation suivante est vérifiée :

$$U_i = U_{0i} + U_{ci} \cos \omega_1 t + U_{si} \sin \omega_1 t$$

où $U_{0i}$ est une valeur moyenne de la commande $U_i$ considérée ;

où $U_{ci}$ est une composante cosinus de la commande $U_i$ considérée ; et

où $U_{is}$ est une composante sinus de la commande $U_i$ considérée.

A chaque commande $U_i$ correspond une valeur de mesure fournie par le gyroscope, relativement à un paramètre opérationnel, notée $X_i$.

Une telle valeur de mesure vérifie l'équation suivante :

$$X_i = X_{0i} + X_{ci} \cos \omega_1 t + X_{si} \sin \omega_1 t$$

On peut alors écrire l'équation suivante :

$$\ddot{X}_i = -\omega_1^2 X_{ci} \cos \omega_1 t - \omega_1^2 X_{si} \sin \omega_1 t$$

Puis, à partir de l'équation précédente, on obtient le système d'équations suivant :

$$\omega_0^2 X_{0i} = EU_{0i}$$

$$\omega_1^2 X_{ci} + \omega_0^2 X_{ci} = EU_{ci}$$

$$\omega_1^2 X_{si} + \omega_0^2 X_{si} = EU_{si}$$

Il convient de noter que, pour n paramètres opérationnels différents, n étant un nombre entier positif, donc relativement à n commandes différentes, le système d'équations comprend 3n équations, pour 4 inconnues si on prend en considération les quatre paramètres opérationnels énoncés ci-avant. La matrice E de défaut à identifier peut être une matrice comportant deux lignes et deux colonnes.

Il y a redondance du nombre d'équations par rapport au nombre d'inconnues. Par conséquent, un tel système d'équations peut aisément être résolu par une estimation aux moindres carrés.

Dans un mode de réalisation de la présente invention, n est égal à 4 (quatre commandes de type différent). Dans ce cas, le système d'équations a 12 équations pour quatre inconnues. Il est alors aisé d'obtenir la matrice d'erreur E par estimation des moindres carrés. On peut ensuite aisément obtenir les valeurs de correction à appliquer au niveau de l'unité de correction de commande 207.

Puis, sur la base de cette matrice d'erreur on en déduit des valeurs de corrections respectives pour les différents paramètres opérationnels.

La figure 4 illustre un système gyroscopique comprenant pour calibrer le gyroscope :

-  une unité de commande 51 adaptée pour obtenir une commande modifiée à appliquer au gyromètre pour le paramètre opérationnel en introduisant une perturbation sinusoïdale dans la commande courante et pour appliquer la commande modifiée au gyromètre en tant que commande courante ;
-  une unité de détermination 52 adaptée pour déterminer une valeur de mesure résultant de la commande courante ;
-  une unité de calcul 53 adaptée pour identifier une valeur de correction par corrélation de la valeur de mesure avec la commande modifiée appliquée.

Un tel système peut en outre comprendre :

-  une unité de décision 54 adaptée pour décider, sur la base de la valeur de mesure, d'actionner les unités de commande, de détermination, de calcul.

**EP 2 573 515 B1**

**Revendications**

1. Procédé de calibration d'un gyroscope vibrant à calibrer dans un système gyroscopique ;
ledit gyroscope vibrant fournissant des mesures et étant asservi en gyromètre dans une boucle d'asservissement ;
ladite boucle d'asservissement correspondant à au moins une commande courante d'un paramètre opérationnel ;
ledit procédé de calibration comprenant les étapes suivantes dans la boucle d'asservissement :

   /a/ obtenir une commande modifiée (11) à appliquer au gyromètre pour ledit paramètre opérationnel en introduisant une perturbation sinusoïdale dans la commande courante ;
   /b/ appliquer la commande modifiée (12) au gyromètre en tant que commande courante ;
   /c/ déterminer une valeur de mesure (13) résultant de l'étape /b/ ; et
   /d/ identifier (15) une valeur de correction du paramètre opérationnel sur la base d'une corrélation (14) entre ladite valeur de mesure et ladite commande modifiée;

   ladite valeur de correction étant appliquée aux prochaines mesures fournies par le gyroscope.

2. Procédé de calibration d'un gyroscope vibrant selon la revendication 1, dans lequel ledit paramètre opérationnel étant au moins un paramètre parmi l'amplitude de la vibration, la phase de la vibration, la position de la vibration et la quadrature.

3. Procédé de calibration d'un gyroscope vibrant selon la revendication 1, dans lequel une équation associée à la boucle d'asservissement relie une commande appliquée au gyroscope et une valeur de mesure en résultant ; et dans lequel l'étape /d/ repose sur ladite équation.

4. Procédé de calibration d'un gyroscope vibrant selon la revendication 1 ou 2, comprenant en outre l'étape suivante :
   /e/ décider (16), sur la base de l'étape /d/, de répéter les étapes /a/ à /d/ tant qu'un critère de convergence n'est pas vérifié.

5. Procédé de calibration d'un gyroscope vibrant selon la revendication 4, dans lequel le critère de convergence est vérifié si la valeur de correction du paramètre opérationnel est inférieure à une valeur seuil.

6. Procédé de calibration d'un gyroscope vibrant selon l'une quelconque des revendications précédentes, dans lequel la perturbation sinusoïdale P vérifie l'équation suivante :

$$P = k.\sin(2.\pi.f_{mod})$$

   où k est une valeur d'amplitude de la perturbation sinusoïdale appliquée ; et,
   où $f_{mod}$ est une valeur de la fréquence de la perturbation sinusoïdale appliquée.

7. Procédé de calibration d'un gyroscope vibrant selon l'une des revendications précédentes, dans lequel les mesures du gyroscope sont relatives à une estimée de l'amplitude, à une estimée de l'erreur de phase, à une estimée de l'erreur de position ou à une estimée de la quadrature.

8. Procédé de calibration d'un gyroscope vibrant selon l'une des revendications précédentes, dans lequel les mesures du gyroscope sont fournies sous forme vectorielle et corrigées à l'aide d'une matrice de détection (A).

9. Procédé de calibration d'un gyroscope vibrant selon l'une quelconque des revendications précédentes, dans lequel la commande courante est relative à un paramètre opérationnel parmi un paramètre relatif à une amplitude, un paramètre relatif à une raideur, un paramètre relatif à une précession et un paramètre relatif à une quadrature.

10. Procédé de calibration d'un gyroscope vibrant selon l'une quelconque des revendications précédentes, dans lequel des commandes modifiées à appliquer relativement à des paramètres opérationnels sont déterminées en parallèle sous forme matricielle, à l'aide d'une matrice de commande (B).

11. Procédé de calibration selon l'une quelconque des revendications précédentes, dans lequel la commande est à une fréquence sensiblement égale à la fréquence propre du gyroscope vibrant.

**12.** Procédé de calibration selon l'une quelconque des revendications précédentes, dans lequel la commande est à une fréquence sensiblement deux fois supérieure à la fréquence propre du gyroscope vibrant.

**13.** Système gyroscopique (50) comprenant un gyroscope vibrant asservi en gyromètre dans une boucle d'asservissement ;
ladite boucle d'asservissement correspondant à au moins une commande courante d'un paramètre opérationnel ;
ledit système gyroscopique comprenant pour calibrer le gyroscope :

    - une unité de commande (51) adaptée pour obtenir une commande modifiée à appliquer au gyromètre pour ledit paramètre opérationnel en introduisant une perturbation sinusoïdale dans la commande courante et pour appliquer la commande modifiée au gyromètre en tant que commande courante ;
    - une unité de détermination (52) adaptée pour déterminer une valeur de mesure résultant de la commande courante ; et
    - une unité de calcul (53) adaptée pour identifier une valeur de correction du paramètre opérationnel sur la base d'une corrélation entre la valeur de mesure et la commande modifiée.

**14.** Système gyroscopique (50) selon la revendication 13, comprenant en outre :

    - une unité de décision (54) adaptée pour décider, sur la base de la valeur de mesure, d'actionner les unités de commande, de détermination, de calcul.

**Patentansprüche**

**1.** Verfahren zur Kalibration eines vibrierenden Gyroskops, welches in einem gyroskopischen System zu kalibrieren ist;
wobei das vibrierende Gyroskop Messungen liefert und als Gyrometer in einer Regelschleife geregelt wird;
wobei die Regelschleife wenigstens einer laufenden Anweisung eines Betriebsparameters entspricht;
wobei das Verfahren zur Kalibration die folgenden Schritte in der Regelschleife umfasst:

    /a/ Erhalten einer modifizierten Anweisung (11), welche auf das Gyrometer für den Betriebsparameter anzuwenden ist, indem eine sinusförmige Störung in der laufenden Anweisung eingeführt wird;
    /b/ Anwenden der modifizierten Anweisung (12) auf das Gyrometer als die laufendende Anweisung;
    /c/ Bestimmen eines Messwerts (13), welcher aus dem Schritt /b/ resultiert; und
    /d/ Identifizieren (15) eines Korrekturwerts des Betriebsparameters auf der Grundlage einer Korrelation (14) zwischen dem Messwert und der modifizierten Anweisung;

wobei der Korrekturwert auf nächste Messungen angewendet wird, welche von dem Gyroskop geliefert werden.

**2.** Verfahren zur Kalibration eines vibrierenden Gyroskops nach Anspruch 1, wobei der Betriebsparameter wenigstens ein Parameter ist aus der Amplitude der Vibration, der Phase der Vibration, der Position der Vibration und der Quadratur.

**3.** Verfahren zur Kalibration eines vibrierenden Gyroskops nach Anspruch 1, wobei eine der Regelschleife zugeordnete Gleichung eine auf das Gyroskop angewendete Anweisung und einen resultierenden Messwert verknüpft; und wobei der Schritt /d/ auf dieser Gleichung beruht.

**4.** Verfahren zur Kalibration eines vibrierenden Gyroskops nach Anspruch 1 oder 2, ferner umfassend den folgenden Schritt:
/e/ Entscheiden (16) auf Grundlage von Schritt /d/, die Schritte /a/ bis /d/ zu wiederholen, wenn ein Konvergenzkriterium nicht erfüllt wird.

**5.** Verfahren zur Kalibration eines vibrierenden Gyroskops nach Anspruch 4, wobei das Konvergenzkriterium erfüllt wird, wenn der Korrekturwert des Betriebsparameters kleiner als ein Schwellenwert ist.

**6.** Verfahren zur Kalibration eines vibrierenden Gyroskops nach einem der vorhergehenden Ansprüche, wobei die sinusförmige Störung P die folgende Gleichung erfüllt:

$$P = k*\sin(2*\pi*f_{mod})$$

wobei k ein Amplitudenwert der angewendeten sinusförmigen Störung ist; und
wobei $f_{mod}$ ein Frequenzwert der angewendeten sinusförmigen Störung ist.

7. Verfahren zur Kalibration eines vibrierenden Gyroskops nach einem der vorhergehenden Ansprüche, wobei die Messungen des Gyroskops bezüglich einer Schätzung der Amplitude, einer Schätzung der Abweichung der Phase, einer Schätzung der Abweichung der Position oder einer Schätzung der Quadratur sind.

8. Verfahren zur Kalibration eines vibrierenden Gyroskops nach einem der vorhergehenden Ansprüche, wobei die Messungen des Gyroskops in vektorieller Form geliefert und mit Hilfe einer Detektionsmatrix (A) korrigiert werden.

9. Verfahren zur Kalibration eines vibrierenden Gyroskops nach einem der vorhergehenden Ansprüche, wobei die laufende Anweisung bezüglich eines Betriebsparameters aus einem Parameter bezüglich einer Amplitude, einem Parameter bezüglich einer Steilheit, einem Parameter bezüglich einer Präzession und einem Parameter bezüglich einer Quadratur ist.

10. Verfahren zur Kalibration eines vibrierenden Gyroskops nach einem der vorhergehenden Ansprüche, wobei die modifizierten Anweisungen, welche bezüglich Betriebsparametern anzuwenden sind, parallel in Matrixform bestimmt werden, mit Hilfe einer Anweisungsmatrix (B).

11. Verfahren zur Kalibration nach einem der vorhergehenden Ansprüche, wobei die Anweisung von einer Frequenz im Wesentlichen gleich der Eigenfrequenz des vibrierenden Gyroskops ist.

12. Verfahren zur Kalibration nach einem der vorhergehenden Ansprüche, wobei die Anweisung von einer Frequenz im Wesentlichen zweimal größer als die Eigenfrequenz des vibrierenden Gyroskops ist.

13. Gyroskopisches System (50), umfassend ein als Gyrometer in einer Regelschleife geregeltes vibrierendes Gyroskop;
wobei die Regelschleife wenigstens einer laufenden Anweisung eines Betriebsparameters entspricht;
wobei das gyroskopische System für ein Kalibrieren des Gyroskops umfasst:

- eine Anweisungseinheit (51), welche dazu eingerichtet ist, eine modifizierte Anweisung zu erhalten, welche auf das Gyrometer für den Betriebsparameter anzuwenden ist, indem eine sinusförmige Störung in der laufenden Anweisung eingeführt wird, sowie die modifizierte Anweisung auf das Gyrometer als laufende Anweisung anzuwenden;
- eine Bestimmungseinheit (52), welche dazu eingerichtet ist, einen Messwert zu bestimmen, welcher aus der laufenden Anweisung resultiert; und
- eine Berechnungseinheit (53), welche dazu eingerichtet ist, einen Korrekturwert des Betriebsparameters auf der Grundlage einer Korrelation zwischen dem Messwert und der modifizierten Anweisung zu identifizieren.

14. Gyroskopisches System (50) nach Anspruch 13, ferner umfassend:

- eine Entscheidungseinheit (54), welche dazu eingerichtet ist, auf Grundlage des Messwerts zu entscheiden, die Anweisungs-, Bestimmungs- und Berechnungseinheiten zu betätigen.

**Claims**

1. Method for calibrating a vibrating gyroscope to be calibrated in a gyroscopic system;
said vibrating gyroscope supplying measurements and being controlled in gyrometer mode in a control loop;
said control loop corresponding to at least one current control for an operating parameter;
said calibration method comprising the following steps in the control loop:

/a/ obtaining a modified control (11) to be applied to the gyrometer for said operating parameter by introducing a sinusoidal interference into the current control;
/b/ applying the modified control (12) to the gyrometer as the current control;
/c/ determining a measurement value (13) resulting from step /b/ ; and

/d/ identifying (15) a correction value for the operating parameter on the basis of a correlation (14) between said measurement value and said modified control;

said correction value being applied to the next measurements supplied by the gyroscope.

2. Method for calibrating a vibrating gyroscope according to claim 1, wherein said operating parameter being at least one among the amplitude of the vibration, the phase of the vibration, the position of the vibration and the quadrature.

3. Method for calibrating a vibrating gyroscope according to claim 1, wherein an equation associated with the control loop links a control applied to the gyroscope and a resulting measurement value; and
wherein step /d/ is based on said equation.

4. Method for calibrating a vibrating gyroscope according to claim 1 or 2, additionally comprising the following step:
/e/ deciding (16), on the basis of step /d/, to repeat steps /a/ to /d/ as long as a convergence criterion is not satisfied.

5. Method for calibrating a vibrating gyroscope according to claim 4, wherein the convergence criterion is satisfied if the correction value for the operating parameter is less than a threshold value.

6. Method for calibrating a vibrating gyroscope according to any one of the above claims, wherein the sinusoidal interference P satisfies the following equation:

$$P = k.\sin(2.\pi.f_{mod})$$

where k is an amplitude value of the applied sinusoidal interference, and
where $f_{mod}$ is a value of the frequency of the sinusoidal interference applied.

7. Method for calibrating a vibrating gyroscope according to any one of the above claims, wherein the measurements from the gyroscope are relative to an amplitude estimate, a phase error estimate, a position error estimate, or a quadrature estimate.

8. Method for calibrating a vibrating gyroscope according to any one of the above claims, wherein the measurements from the gyroscope are supplied in vector form and are corrected using a detection matrix (A).

9. Method for calibrating a vibrating gyroscope according to any one of the above claims, wherein the current control is relative to an operating parameter from among a parameter relative to an amplitude, a parameter relative to a stiffness, a parameter relative to a precession, and a parameter relative to a quadrature.

10. Method for calibrating a vibrating gyroscope according to any one of the above claims, wherein the modified controls to be applied relative to operating parameters are determined in parallel in matrix form, using a control matrix (B).

11. Method for calibrating according to any one of the above claims, wherein the control is at a frequency substantially equal to the natural frequency of the vibrating gyroscope.

12. Method for calibrating according to any one of the above claims, wherein the control is at a frequency substantially two times greater than the natural frequency of the vibrating gyroscope.

13. Gyroscopic system (50) comprising a vibrating gyroscope controlled in gyrometer mode in a control loop;
said control loop corresponding to at least one current control for an operating parameter;
said gyroscopic system comprising, for calibrating the gyroscope:

- a control unit (51) adapted to: obtain a modified control to be applied to the gyrometer for said operating parameter by introducing a sinusoidal interference into the current control, and to apply the modified control to the gyrometer as the current control;
- a determination unit (52) adapted to determine a measurement value resulting from the current control; and
- a calculation unit (53) adapted to identify a correction value for the operating parameter on the basis of a correlation between the measurement value and the modified control.

14. Gyroscopic system (50) according to claim 13, additionally comprising:

- a decision unit (54) adapted to decide, on the basis of the measurement value, whether to actuate the control, determination, calculation units

FIG. 1

FIG. 4

FIG. 2

**FIG. 3**

EP 2 573 515 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090095078 A

**Littérature non-brevet citée dans la description**

- **ANDREI M. SHKEL.** Type I and Type II micromachined vibratory gyroscopes. Institute of Electrical and Electronics Engineer, 586-593